# EUROPÄISCHE PATENTANMELDUNG

(11) **EP 0 904 916 A2**
(43) Veröffentlichungstag der Anmeldung: **31.03.1999**
(21) Anmeldenummer: 98117894.0
(22) Anmeldetag: 22.09.1998
(51) Int. Cl.: B29C 44/10

(54) **Verfahren zur Herstellung feinzelliger Hartschaumstoffe auf Isocyanatbasis**

(30) Priorität: 26.09.1997 DE 19742568
(71) Anmelder: BASF AKTIENGESELLSCHAFT, 67056 Ludwigshafen (DE)
(72) Erfinder: Volker, Otto, Dr., 67273 Weisenheim (DE); Rotermund, Udo, Dr., 01990 Ortrand (DE); Biedermann, Anja, 01968 Senftenberg (DE); Heinz, Marion, 02994 Bernsdorf (DE)

(57) **Zusammenfassung**

Die Erfindung betrifft Verfahren zur Herstellung von feinzelligen Polyurethan-Hartschaumstoffen durch Umsetzung von Polyisocyanaten mit Verbindungen mit mindestens zwei reaktiven Wasserstoffatomen, in geschlossenen Formen, dadurch gekennzeichnet, daß
a) die Reaktionskomponenten vor dem Einbringen in das Formwerkzeug mit Gas unter Druck beladen werden,
b) das Formwerkzeug vor, während oder nach dem Einbringen der Reaktionsmischung mit Druck beaufschlagt wird,
c) nach dem Einbringen der Reaktionsmischung in das Formwerkzeug und vor dem Abbinden des Hartschaumstoffs eine Druckentspannung im Formwerkzeug stattfindet.

## Beschreibung

Die Erfindung betrifft ein Verfahren zur Herstellung von feinzelligen Hartschaumstoffen auf Isocyanatbasis sowie eine Vorrichtung zur Durchführung des Verfahrens.

Die Herstellung von Hartschaumstoffen auf Isocyanatbasis sowie die Verwendung derartiger Produkte als Wärmeisolationsmaterial ist seit langem bekannt und vielfach in der Literatur beschrieben. Als chemische Strukturen, die aus dem Polyisocyanaten entstehen, können in den Schaumstoffen Polyurethane, Polyharnstoffe, Polyisocyanurate, und auch weitere Isocyanataddukte wie Allophanate, Biurete, Carbodiimide und deren Isocyanataddukte, Oxazolidone, Polyimide, Polyamide und andere, vorliegen. Im allgemeinen faßt man diese Isocyanataddukte unter dem Begriff Polyurethane zusammen, da die Polyurethane von den Polyisocyanataddukten die wichtigste und häufigste Stoffgruppe sind. Hartschaumstoffe auf Isocyanatbasis werden daher zumeist als Polyurethan (PUR)-Hartschaumstoffe bezeichnet. Im Falle eines bedeutenden Anteils an Isocyanuratstrukturen bezeichnet man diese Schaumstoffe auch als Polyurethan/Polyisocyanurat (PUR/PIR) - Schaumstoffe, oder auch nur PIR-Schaumstoffe. Die Herstellung derartiger Schaumstoffe wird beispielsweise im Kunststoff-Handbuch, Band VII, Polyurethane, Carl-Hauser-Verlag, München, 1. Auflage 1966, 2. Auflage 1983 und 3. Auflage, 1993 beschrieben.

Diese Schaumstoffe haben zumeist einen Zelldurchmesser von über 200 µm. Bei geschlossenzelligen Schaumstoffen ist durch diesen großen Zelldurchmesser die Wärmeleitfähigkeit zu hoch. Bei offenzelligen PU-Hartschaumstoffen, wie sie insbesondere als Kernmaterial für Vakuumisolationseinheiten verwendet werden, sind die Anforderungen an das Vakuum sehr hoch, um die geforderten niedrigen Wärmeleitfähigkeiten zu erhalten. Je größer der Zelldurchmesser der Schaumstoffe ist, desto schwieriger läßt sich im Schaumstoff ein stabiles Vakuum erzeugen. Außerdem haben offenzellige Schaumstoffe mit größeren Zellen bei gleichem Vakuum eine höhere Wärmeleitfähigkeit.

Es hat daher nicht an Versuchen gefehlt, auf physikalischchemischem Weg die Zellen der Schaumstoffe zu verkleinern. So wird in EP-A-351 614 und DE-A-41 43 148 vorgeschlagen, als Treibmittel Perfluorverbindungen einzusetzen. Derartige Treibmittel sind jedoch sehr teuer.

Neben der chemisch-physikalischen Beeinflussung der Zellgröße, beispielsweise durch die Auswahl der Treibmittel, ist es auch möglich, durch die Bedingungen der Verschäumung selbst die Zellgröße unabhängig von der Formulierung zu verringern. So ist es bekannt, daß ein PU-Hartschaumstoff bei maschineller Verschäumung zumeist feinzelliger ist als bei Vermischung der Komponenten in einem einfachen Rührwerk und nachfolgender Verschäumung.

Aus dem Kunststoff-Handbuch, Band VII, Polyurethane, 2. Auflage 1966, Seiten 470-473 ist es bekannt, die Zellgröße und die Zahl der Keime durch Variation des Druckes im Mischkopf zu verändern. Die hierbei bewirkte Veränderung ist jedoch bei sehr großen Zellgrößen über 300 µm signifikant.

In US-A-5,472,990, EP-A-378 243 und EP-A-686 467 werden Vorrichtungen zur Gasbeladung und Keimbildung beschrieben. Die dort beschriebene Beladung z.B. mit Kohlendioxid führt jedoch nur zu geringen Veränderungen der Zellgröße.

Die Aufgabe der Erfindung bestand darin, die Zellgröße von Hartschaumstoffen auf Isocyanatbasis zu verringern, ohne daß spezielle Rezepturänderungen notwendig sind oder nach der Schaumherstellung keine zusätzlichen Verfahrensschritte durchgeführt werden müssen.

Die Aufgabe konnte überraschenderweise durch spezielle Druckverhältnisse bei der Verschäumung gelöst werden.

Gegenstand der Erfindung ist demzufolge ein Verfahren zur Herstellung von feinzelligen Hartschaumstoffen auf Isocyanatbasis durch Umsetzung von Polyisocyanaten mit Verbindungen, die mindestens zwei reaktive Wasserstoffatome enthalten, in Gegenwart von Treibmitteln, Katalysatoren und gegebenenfalls weitere Hilfs- und/oder Zusatzstoffen in einem geschlossenen Formwerkzeug, dadurch gekennzeichnet, daß
a) die Reaktionskomponenten vor dem Einbringen in das Formwerkzeug mit einem Gas beladen werden,
b) das Formwerkzeug vor oder während dem Einbringen der Reaktionskomponenten mit Gas unter Druck beaufschlagt wird,
c) nach dem Einbringen der Reaktionsmischung in das Formwerkzeug und vor dem Abbinden des Werkschaumstoffes eine Druckentspannung im Formwerkzeug stattfindet.

Die Beladung der Reaktionskomponenten mit dem Gas erfolgt bei Drücken von 0,1 bis 26 bar.

Das Formwerkzeug wird mit einem Druck im Bereich von 0 bar bis 25 bar, insbesondere 0,5 bar bis 15 bar, beaufschlagt. Die Druckentspannung im Formwerkzeug erfolgt auf 0,1 bar bis 10 bar, bevorzugt 0,9 bar bis 2 bar, wobei die Druckentspannung in der Zeit von 0 Sekunden nach dem Einbringen der Reaktionsmischung in das Formwerkzeug bis zur Abbindezeit minus einer Sekunde durchgeführt wird.

Der Druck wird mittels bei Raumtemperatur gasförmigen und gegenüber den Reaktionskomponenten inerten Stoffen, wie Luft, Stickstoff, Kohlendioxid, Distickstoffoxid, Argon, Helium oder Neon, insbesondere Kohlendioxid, erzeugt.

Es ist zur Durchführung des erfindungsgemäßen Verfahrens vorteilhaft, die Vorratsbehälter für die Polyurethan-Komponenten sowie die Produktleitungen bis zum Mischkopf ebenfalls unter Druck zu halten. Der Druck sollte hier 0 bar bis 26 bar, insbesondere 0,5 bar bis 15 bar betragen.

Der Druck im Formwerkzeug ist hierbei stets geringer als der Druck, bei dem die Reaktionskomponenten mit dem Gas beladen werden.

Das erfindungsgemäße Verfahren ist für die Herstellung aller Hartschaumstoffe auf Isocyanatbasis, die in Formen hergestellt werden, anwendbar, insbesondere jedoch bei der Herstellung von Polyurethan (PUR)- und Polyurethan-Polyisocyanurat (PIR)-Schaum.

Zu den Einsatzkomponenten derartiger Schaumstoffe ist im einzelnen folgendes zu sagen:

Als organische Polyisocyanate kommen die an sich bekannten aliphatischen, cycloaliphatischen, araliphatischen und vorzugsweise aromatischen mehrwertigen Isocyanate in Frage, wie sie beispielsweise in EP-A-0 421 269 (Spalte 4, Zeile 49, bis Spalte 6, Zeile 22) oder in EP-A-0 719 807 (Spalte 2, Zeile 53, bis Spalte 4, Zeile 21) aufgeführt sind.

Besonders bewährt haben sich Diphenylmethan-diisocyanat-Isomerengemische (Roh-MDI) mit einem Diphenylmethandiisocyanatisomerengehalt von 33 bis 55 Masse-% und urethangruppenhaltige Polyisocyanatgemische auf Basis von Diphenylmethandiisocyanat mit einem NCO-Gehalt von 15 bis 33,6 Masse-%.

Als Verbindungen mit mindestens zwei gegenüber Isocyanaten reaktiven Wasserstoffatomen werden erfindungsgemäß die oben beschriebenen aromaten- und stickstoffhaltigen Polyether eingesetzt. Daneben können weitere Verbindungen mit mindestens zwei gegenüber Isocyanaten reaktiven Wasserstoffatomen verwendet werden. Hierfür kommen Verbindungen in Frage, die zwei oder mehrere reaktive Gruppen, ausgewählt aus OH-Gruppen, SH-Gruppen, NH-Gruppen, NH₂-Gruppen und CH-aciden Gruppen, insbesondere OH-Gruppen, im Molekül tragen.

Zweckmäßigerweise werden solche mit einer Funktionalität von 2 bis 8, vorzugsweise 2 bis 6, und einem mittleren Molekulargewicht von 300 bis 8000, vorzugsweise von 400 bis 4000, verwendet. Bewährt haben sich z.B. Polyether-polyamine und/oder vorzugsweise Polyole, ausgewählt aus der Gruppe der Polyether-polyole, Polyester-polyole, Polythioether-polyole, Polyester-amide, hydroxylgruppenhaltigen Polyacetale und hydroxylgruppenhaltigen aliphatischen Polycarbonate oder Mischungen aus mindestens zwei der genanten Polyole. Vorzugsweise Anwendung finden Polyester-polyole und/oder Polyether-polyole. Die Hydroxylzahl der Polyhydroxylverbindungen beträgt dabei zumeist 100 bis 850 und vorzugsweise 200 bis 600. Nähere Ausführungen zu den einsetzbaren Verbindungen sind beispielsweise aus EP-A-0 421 269 (Spalte 6, Zeile 23, bis Spalte 10, Zeile 5) oder EP-A-0 719 807 (Spalte 4, Zeile 23, bis Spalte 7, Zeile 55) ersichtlich.

Die PUR-Hartschaumstoffe können ohne oder unter Mitverwendung von Kettenverlängerungs- und/oder Vernetzungsmitteln hergestellt werden. Zur Modifizierung der mechanischen Eigenschaften, z.B. der Härte, kann sich der Zusatz von Kettenverlängerungsmitteln, Vernetzungsmitteln oder gegebenenfalls auch Gemischen davon als vorteilhaft erweisen. Als Kettenverlängerungs- und/oder Vernetzungsmittel verwendet werden zumeist Diole und/oder Triole mit Molekulargewichten kleiner als 400, vorzugsweise von 60 bis 300. In Betracht kommen vorzugsweise aliphatische, cycloaliphatische und/oder araliphatische Diole mit 2 bis 14, vorzugsweise 2 bis 10 Kohlenstoffatomen. Nähere Ausführungen zu diesen und weiteren einsetzbaren Verbindungen sind beispielsweise aus EP-A-0 421 269 (Spalte 10, Zeilen 6 bis 48) zu entnehmen.

Sofern zur Herstellung der Hartschaumstoffe Kettenverlängerungsmittel, Vernetzungsmittel oder Mischungen davon Anwendung finden, kommen diese zweckmäßigerweise in einer Menge von 0 bis 20 Gew.-%, vorzugsweise von 2 bis 8 Gew.-%, bezogen auf das Gewicht der Verbindungen mit mindestens zwei reaktiven Wasserstoffatomen, zum Einsatz.

Als Katalysatoren zur Herstellung der PUR-Hartschaumstoffe werden insbesondere Verbindungen verwendet, die die Reaktion der reaktive Wasserstoffatome, insbesondere Hydroxylgruppen, enthaltenden Verbindungen mit den organischen, gegebenenfalls modifizierten Polyisocyanaten stark beschleunigen. Die Isocyanatgruppen können durch geeignete Katalysatoren aber auch miteinander zur Reaktion gebracht werden, wobei neben den Addukten zwischen Isocyanaten und den Verbindungen mit wasserstoffaktiven Gruppen vorzugsweise Isocyanuratstrukturen entstehen.

Als Katalysatoren werden also insbesondere solche Stoffe verwendet, die Reaktionen der Isocyanate beschleunigen, insbesondere die Urethan-, Harnstoff- und Isocyanuratbildung.

Bevorzugt hierfür sind tertiäre Amine, Zinn- und Bismutverbindungen, Alkali- und Erdalkalicarboxylate, quarternäre Ammoniumsalze, s-Hexahydrotriazine und Tris-(dialkylaminomethyl)-phenole.

Nähere Angaben zu einsetzbaren Katalysatoren sind beispielsweise aus EP-A-0 719 807 (Spalte 9, Zeilen 5 bis 56) zu entnehmen.

Der Reaktionsmischung zur Herstellung der PUR-Hartschaumstoffe können gegebenenfalls auch noch Hilfsmittel und/oder Zusatzstoffe einverleibt werden. Genannt seien beispielsweise oberflächenaktive Substanzen, Schaumstabilisatoren, Zellregler, Flammschutzmittel, Füllstoffe, Farbstoffe, Pigmente, Hydrolyseschutzmittel, fungistatische und bakteriostatisch wirkende Substanzen. Nähere Ausführungen zu den einsetzbaren Verbindungen sind beispielsweise aus EP-A-0 421 269 (Spalte 12, Zeile 55, bis Spalte 14, Zeile 25) oder EP-A-0 719 807 (Spalte 9, Zeile 58, bis Spalte 13, Zeile 17) ersichtlich.

Zu Treibmitteln, welche zur Herstellung der erfindungsgemäßen Schaumstoffe gegebenenfalls eingesetzt werden können, gehört vorzugsweise Wasser, das mit Isocyanatgruppen unter Bildung von Kohlendioxid reagiert. Die Wassermengen, die zweckmäßigerweise eingesetzt werden, betragen 0,1 bis 8 Gew.-Teile, vorzugsweise 1,5 bis 5,0 Gew.-Teile und insbesondere 2,5 bis 3,5 Gew.-Teile, bezogen auf 100 Gew.-Teile der Verbindungen mit mindestens 2 aktiven Wasserstoffatomen.

Im Gemisch mit Wasser können auch physikalisch wirkende Treibmittel eingesetzt werden. Geeignet sind Flüssigkeiten, welche gegenüber den organischen, gegebenenfalls modifizierten Polyisocyanaten inert sind und Siedepunkte unter 100°C, vorzugsweise unter 50°C, insbesondere zwischen -50°C und 30°C bei Atmosphärendruck aufweisen, so daß sie unter dem Einfluß der exothermen Polyadditionsreaktion verdampfen. Beispiele derartiger, vorzugsweise verwendbarer Flüssigkeiten sind Alkane, wie Heptan, Hexan, n- und iso-Pentan, vorzugsweise technische Gemische aus n- und iso-Pentanen, n- und iso-Butan und Propan, Cycloalkane, wie Cyclopentan und/oder Cyclohexan, Ether, wie Furan, Dimethylether und Diethylether, Ketone, wie Aceton und Methylethylketon, Carbonsäurealkylester, wie Methylformiat, Dimethyloxalat und Ethylacetat und halogenierte Kohlenwasserstoffe, wie Methylenchlorid, Dichlormonofluormethan, Difluormethan, Trifluormethan, Difluorethan, Tetrafluorethan, Chlor-difluorethane, 1,1-Dichlor-2,2,2- trifluorethan, 2,2-Dichlor-2-fluorethan und Heptafluorpropan. Auch Gemische dieser niedrigsiedenden Flüssigkeiten untereinander und/oder mit anderen substituierten oder unsubstituierten Kohlenwasserstoffen können verwendet werden. Geeignet sind ferner organische Carbonsäuren, wie z.B. Ameisensäure, Essigsäure, Oxalsäure, Ricinolsäure und carboxylgruppenhaltige Verbindungen.

Vorzugsweise Verwendung finden Wasser, Chlordifluormethan, Chlordifluorethane, Dichlorfluorethane, Pentangemische, Cyclohexan und Mischungen aus mindestens zwei dieser Treibmittel, z.B. Mischungen aus Wasser und Cyclohexan, Mischungen aus Chlordifluormethan und 1-Chlor-2,2-difluorethan und gegebenenfalls Wasser.

Die neben Wasser erforderliche Menge an physikalisch wirkenden Treibmitteln kann in Abhängigkeit von der gewünschten Schaumstoffdichte auf einfache Weise ermittelt werden und beträgt ungefähr 0 bis 25 Gew.-Teile, vorzugsweise 0 bis 15 Gew.-Teile pro 100 Gew.-Teile der Verbindungen mit mindestens zwei aktiven Wasserstoffatomen. Gegebenenfalls kann es zweckmäßig sein, die gegebenenfalls modifizierten Polyisocyanate mit dem inerten physikalisch wirkenden Treibmittel zu mischen und dadurch die Viskosität zu verringern.

Zumeist jedoch werden die Ausgangsstoffe mit Ausnahme der Polyisocyanate zur sogenannten Polyolkomponente vereinigt.

Zur Herstellung der erfindungsgemäßen Schaumstoffe werden die Isocyanat- und die Polyolkomponente vereinigt und danach aufschäumen gelassen.

Als Vermischungseinheit verwendet man vorzugsweise die bekannten Hochdruckmischköpfe nach dem Hochdruckverfahren, das beispielsweise im Kunststoff-Handbuch, Band VII, Polyurethane, herausgegeben von G. Oertel im Carl-Hanser-Verlag, München - Wien 1993, Seite 143 ff, beschrieben ist.

Es können aber auch die an gleicher Stelle beschriebenen Niederdruckmischköpfe eingesetzt werden.

Nach dem erfindungsgemäßen Verfahren können die Zellgrößen aller Hartschaumstoffe auf Isocyanatbasis verringert werden, sowohl der offenzelligen als auch der geschlossenzelligen Typen.

Besonders vorteilhaft ist das erfindungsgemäße Verfahren bei der Herstellung offenzelliger Schaumstoffe, die als Kernmaterial für Vakuum-Isolationseinheiten eingesetzt werden können.

Die Erfindung soll an nachfolgenden Beispielen näher erläutert werden.

### Rezeptur A:

- Polyetherol 1:: 30 % eines mit Toluylendiamin gestarteten Polyetherpolyols aus Ethylenoxid und Propylenoxid mit einer Hydroxylzahl von 400 mg KOH/g
- Polyetherol 2:: 20 % eines Polyetherols auf Basis von Bisphenol-A, Diethanolamin, Formaldehyd und Propylenoxid mit einer Hydroxylzahl von 530 mg KOH/g
- Polyetherol 3:: 23 % eines Polyetherols auf Basis Saccharose, Glycerol und Propylenoxid mit einer Hydroxylzahl von 490 mg KOH/g
- Polyetherol 4:: 5 % eines Polyetherols auf Basis von Propylenglykol und Propylenoxid mit einer Hydroxylzahl von 250 mg KOH/g
- Polyetherol 5:: 15 % eines Polyetherols, Amin-gestartet mit Ethylenoxid und Propylenoxid mit einer Hydroxylzahl von 115 mg KOH/g
- Stabilisator:: 3 % Siliconstabilisator Tegostab® B8465 von Th. Goldschmidt
- Katalysatoren:: 0,5 % Dimethylcyclohexylamin
0,7 % Pentamethyldiethylentriamin
0,7 % Dabco® TMR3 von Air Products
- Treibmittel:: 2 % Wasser
13 % Cyclopentan
- Polyisocyanat:: Roh-MDI Lupranat®M20A (NCO-Gehalt 31,5 Gew.-%), BASF AG
- Kennzahl:: 135

### Rezeptur B:

- Polyetherol 1:: 20 % eines Polyetherols auf Basis Ethylendiamin und Propylenoxid mit einer Hydroxylzahl von 470 mg KOH/g
- Polyetherol 2:: 40 % eines Polyetherols auf Basis Saccharose, Glycerol und Propylenoxid mit einer Hydroxylzahl von 490 mg KOH/g
- Polyetherol 3:: 30 % eines Polyetherols auf Basis Trimethylolpropan und Propylenoxid mit einer Hydroxylzahl von 555 mg KOH/g
- Polyesterol 4:: 10 % eines Polyetherols bestehend aus Ricinusöl und Glycerol mit einer Hydroxylzahl von 360 mg KOH/g
- Stabilisatoren und Zellöffner:: 3 % Tegostab® B 8919 von Th. Goldschmidt
1 % Tegostab® B 8863Z von Th. Goldschmidt
1 % Fluorad® FC-430 von 3M
- Katalysator:: 5 % Dabco® AN20 von Air Products
- Treibmittel:: 0,5 % Wasser
7 % Cyclopentan
4 % Perfluorhexan
- Polyisocyanat:: Roh-MDI Lupranat® M20A
(NCO-Gehalt 31,5 Gew.-%); BASF AG
- Kennzahl:: 130

### Rezeptur C:

- Polyetherol 1:: 78,5 % eines Polyetherols auf Basis Saccharose, Glycerol und Propylenoxid mit einer Hydroxylzahl von 490 mg KOH/g
- Polyetherol 2:: 15 % eines Polyetherols auf Basis von Propylenglykol und Propylenoxid mit einer Hydroxylzahl von 105 mg KOH/g
- Katalysator:: 2 % Dimethylcyclohexylamin
- Stabilisator:: 2,5 % Polyurax® SR321 von Deutsche BP Chemie GmbH
- Treibmittel:: 2 % Wasser
- Polyisocyanat:: Roh-MDI Lupranat® M20W
(NCO-Gehalt 31,5 Gew.-%) BASF AG
- Kennzahl:: 110

Die Systeme zeigten folgende Laborwerte (freigeschäumt)

| | A | B | C |
|---|---|---|---|
| Startzeit [s] | 10 | 11 | 15 |
| Abbindezeit [s] | 51 | 65 | 50 |
| RD [kg/m³] | 31 | 58 | 52 |

Die Verschäumung wurde mittels einer Hochdruckverschäummaschine vom Typ Puromat® der Firma Elastogran GmbH durchgeführt.

Es wurde eine zylindrische Schaumform mit einem Durchmesser von 20 cm und einer Höhe von 5 cm verwendet.

Die Bestimmung der Offenzelligkeit erfolgte nach ASTM D 2856-87, Verf. B, die Bestimmung der Rohdichte erfolgte nach DIN 53420, die Bestimmung der Zelldurchmesser erfolgte nach ASTM D 3576-77, die Bestimmung der Wärmeleitfähigkeit erfolgte nach DIN 52616 in einem Hesto-Lambdakontrol A 50.

### Beispiel 1 bis 6

### Verschäumung von Rezeptur A

Es wurde wie oben beschrieben verschäumt. Die Druckbedingungen und die gefundenen Ergebnisse finden sich in Tabelle 1.

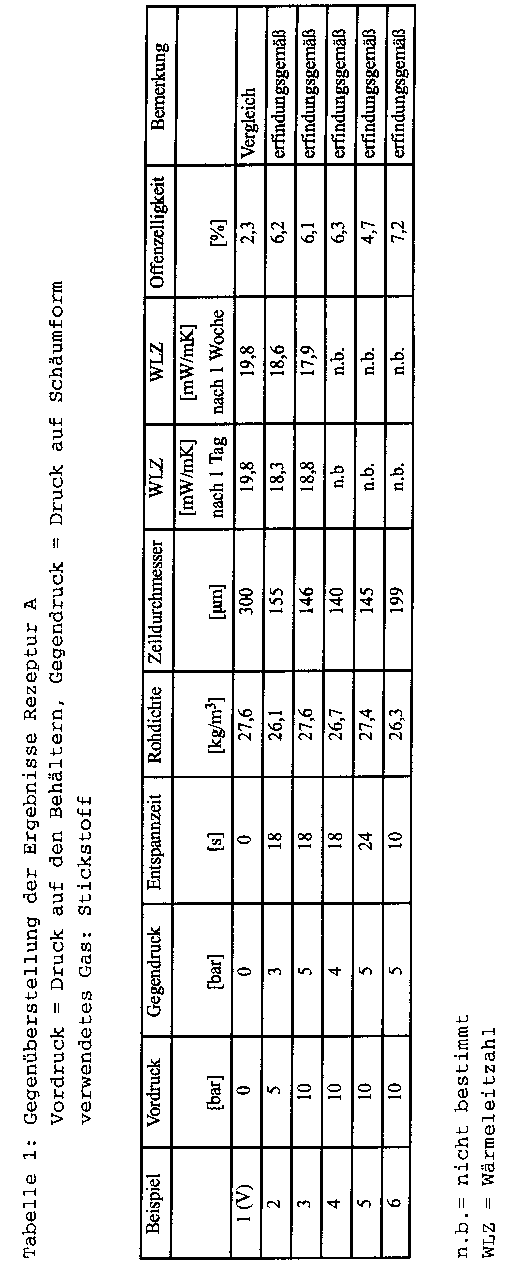

### Beispiele 7 bis 11

### Verschäumung der Rezeptur B

Es wurde wie oben beschrieben verschäumt. Die Drücke und die gefundenen Ergebnisse finden sich in Tabelle 2.

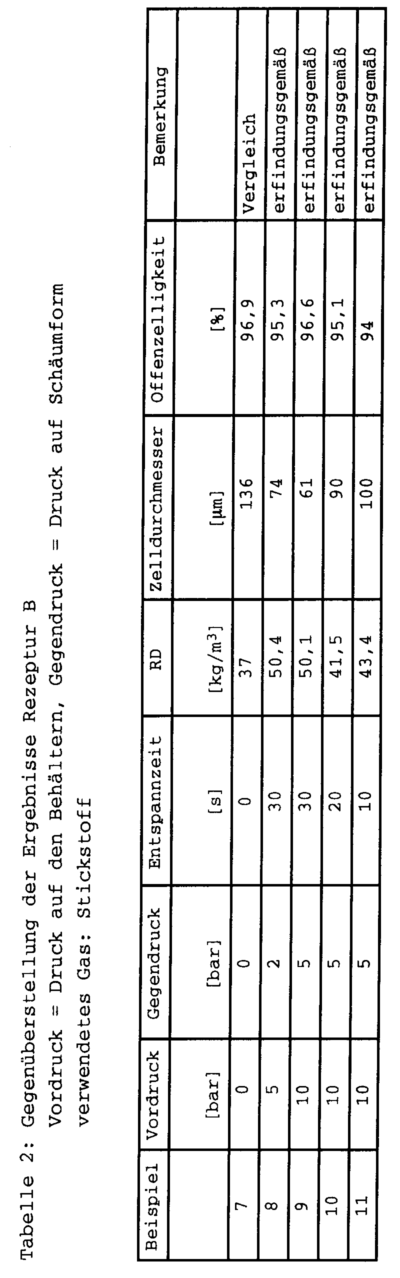

### Beispiele 12 bis 16

Rezeptur C wurde wie beschrieben verschäumt. Die Druckbedingungen finden sich in Tabelle 3.

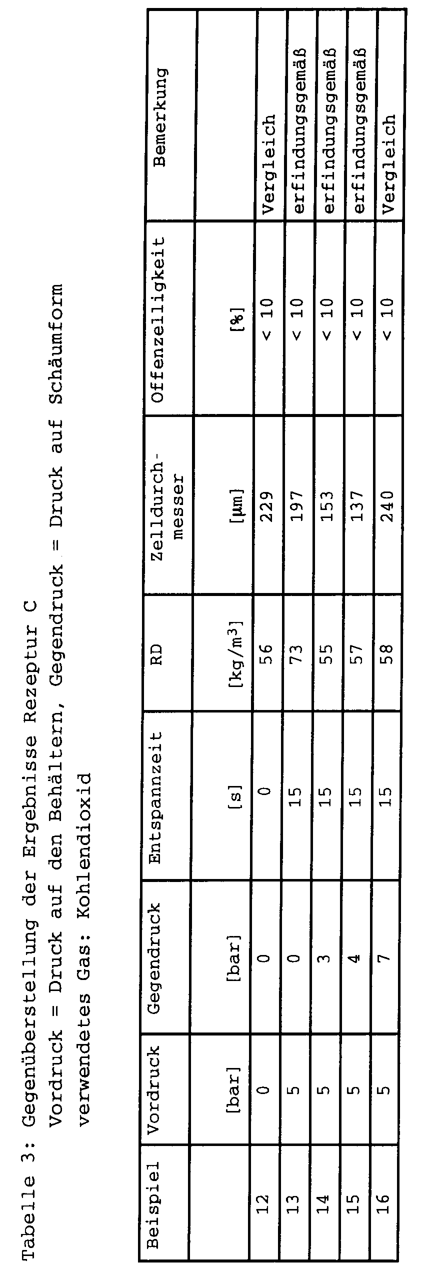

### Beispiele 17 bis 20 (Vergleich)

Rezeptur A wurde bei unterschiedlichen Drücken im Mischkopf verschäumt, es erfolgte jedoch keine Gasbeladung der Polyurethan-Aufbaukomponenten und kein Druckaufbau in Formwerkzeug.

Die Ergebnisse sind in Tabelle 4 festgehalten.

**Tabelle 4**

| Beispiel | Austragsleistung Druck [g/l] | im Mischkopf [bar] | d-I-[µm] | d II [µm] |
|---|---|---|---|---|
| 17 | 220 | 125 | 242 | 279 |
| 18 | 235 | 140 | 232 | 280 |
| 19 | 250 | 158 | 219 | 234 |
| 20 | 270 | 180 | 231 | 258 |
| d-l-: Zellgröße senkrecht zur Schäumrichtung d II: Zellgröße in Schäumrichtung | | | | |

### Beispiel 21 bis 23 (Vergleich)

Die Reaktionskomponenten der Rezeptur A wurden bei 8 bar Behälterdruck mit Kohlendioxid gesättigt und ohne Überdruck im Formwerkzeug verschäumt.

Die Ergebnisse sind in Tabelle 5 festgehalten.

| | Beladung [%] | WLZ [mW/mK] nach 1 Tag | d-I-[µm] | d-II [µm] |
|---|---|---|---|---|
| ohne | 0,0 % | 19,6 | 201 | 240 |
| CO₂ | 0,4 % | 19,9 | 220 | 226 |
| CO₂ | 0,8 % | 20,1 | 282 | 298 |
| WLZ- Wärmeleitzahl d-l- Zellgröße senkrecht zur Schäumrichtung d II Zellgröße in Schaumrichtung | | | | |

## Patentansprüche

1. Verfahren zur Herstellung von feinzelligem Hartschaum auf Isocyanatbasis durch Umsetzung von Polyisocyanaten mit Verbindungen mit mindestens zwei reaktiven Wasserstoffatomen in geschlossenen Formen, dadurch gekennzeichnet, daß
a) die Reaktionskomponenten vor dem Einbringen in das Formwerkzeug mit Gas unter Druck beladen werden,
b) das Formwerkzeug vor, während oder nach dem Einbringen der Reaktionsmischung mit Druck beaufschlagt wird,
c) nach dem Einbringen der Reaktionsmischung in das Formwerkzeug und vor dem Abbinden des Hartschaumstoffs eine Druckentspannung im Formwerkzeug stattfindet.

2. Verfahren nach Anspruch 1, dadurch gekennzeichnet, daß die Polyurethan-Aufbaukomponenten bei einem Druck von 1 bar bis 26 bar mit einem Gas beladen werden.

3. Verfahren nach Anspruch 1 oder 2, dadurch gekennzeichnet, daß der Druck im Formwerkzeug 0,1 bar bis 25 bar beträgt.

4. Verfahren nach einem der Ansprüche 1 bis 3, dadurch gekennzeichnet, daß der Druck im Formwerkzeug 0,5 bar bis 15 bar beträgt.

5. Verfahren nach einem der Ansprüche 1 bis 4, dadurch gekennzeichnet, daß der Druck im Formwerkzeug nach der Druckentspannung 0,1 bis 10 bar beträgt.

6. Verfahren nach einem der Ansprüche 1 bis 5, dadurch gekennzeichnet, daß der Druck im Formwerkzeug kleiner ist als der Druck, bei dem die Polyurethan-Aufbaukomponenten mit dem Gas beladen werden.

7. Verfahren nach einem der Ansprüche 1 bis 6, dadurch gekennzeichnet, daß die Druckentspannung im Formwerkzeug in der Zeit von 0 Sekunden nach Dosierung der Reaktionsmischung bis zur Abbindezeit minus 1 Sekunde durchgeführt wird.

8. Verfahren nach einem der Ansprüche 1 bis 7, dadurch gekennzeichnet, daß als Gase, mit denen die Reaktionskomponenten beladen werden, bei Raumtemperatur gasförmige und gegenüber den Reaktionskomponenten inerte Stoffe verwendet werden.

9. Verfahren nach einem der Ansprüche 1 bis 8, dadurch gekennzeichnet, daß die Gase, mit denen die Reaktionskomponenten beladen werden, ausgewählt sind aus der Gruppe, enthaltend Luft, Stickstoff, Kohlendioxid, Distickstoffoxid, Argon, Helium, Neon sowie Mischungen daraus.

10. Verfahren nach einem der Ansprüche 1 bis 9, dadurch gekennzeichnet, daß die Reaktionskomponenten insbesondere mit Kohlendioxid und/oder Stickstoff gesättigt sind.
